# FASCICULE DE BREVET EUROPEEN

(11) **EP 1 898 199 B1**
(45) Date de publication et mention de la délivrance du brevet: **14.04.2010**
(21) Numéro de dépôt: 07301321.1
(22) Date de dépôt: 24.08.2007
(51) Int. Cl.: G01M 3/26

(54) **Procédé de test d'étanchéité, éprouvette et banc de test**
Dichtigkeitsprüfverfahren, Prüfobjekt und Prüfstand
Tightness testing method, specimen and test bench

(30) Priorité: 06.09.2006 FR 0607817
(43) Date de publication de la demande: 12.03.2008
(73) Titulaire: Gaztransport & Technigaz, 78470 Saint-Rémy-lès-Chevreuse (FR)
(72) Inventeur: Dhellemmes, Jacques, 78000, VERSAILLES (FR); Lefevre, Nicolas, 78000, VERSAILLES (FR); Preato-pavret de la rochefordiere, Sophie, 64122, URRUGNE (FR); Huon de kermadec, Christophe, 78000, VERSAILLES (FR)
(74) Mandataire: Abello, Michel

(56) Documents cités:
- WO-A-00/09914
- BE-A- 653 074
- FR-A1- 2 172 321
- FR-A1- 2 724 623
- GB-A- 895 063
- US-A- 2 108 176
- US-A- 4 246 775
- US-A- 4 409 818
- US-A- 4 979 390

## Description

La présente invention se rapporte à un procédé de test d'étanchéité d'une éprouvette, ainsi qu'à une éprouvette et un banc de test pour la mise en oeuvre du procédé.

Dans la demande de brevet français n° 2 724 623, on a proposé une cuve étanche et thermiquement isolée intégrée dans une structure porteuse, notamment de navire. La paroi de la cuve présente, successivement depuis l'intérieur de la cuve vers la structure porteuse, une barrière d'étanchéité primaire au contact du produit contenu dans la cuve, une barrière thermiquement isolante primaire, une barrière d'étanchéité secondaire et une barrière thermiquement isolante secondaire. La barrière d'étanchéité secondaire et la barrière thermiquement isolante secondaire sont essentiellement constituées par un ensemble de panneaux préfabriqués fixés sur la structure porteuse, chaque panneau étant formé, en premier lieu, d'une première plaque rigide portant une couche d'isolant thermique et constituant avec elle un élément de barrière thermiquement isolante secondaire, en deuxième lieu, d'une nappe étanche adhérant sensiblement sur toute la surface de la couche d'isolant thermique de l'élément de barrière thermiquement isolante secondaire précité, ladite nappe étant constituée d'un matériau composite dont les deux couches de renfort externes sont des tissus de fibres de verre et dont la couche intermédiaire est une feuille d'aluminium mince déformable de 0,1 mm d'épaisseur, ladite nappe étanche formant un élément de barrière d'étanchéité secondaire, en troisième lieu, d'une deuxième couche d'isolant thermique, qui recouvre partiellement la nappe précitée et qui y adhère et, en quatrième lieu, d'une deuxième plaque rigide recouvrant la deuxième couche d'isolant thermique et constituant avec elle un élément de barrière thermiquement isolante primaire.

Les zones entre deux panneaux adjacents sont comblées, de façon à assurer la continuité de la barrière d'étanchéité secondaire. Plus précisément, pour assurer la continuité de l'étanchéité de la barrière d'étanchéité secondaire, il est prévu qu'au droit des joints entre panneaux, les rebords périphériques adjacents de deux panneaux adjacents sont recouverts d'une bande de nappe étanche comportant également trois couches, ladite bande adhérant sur les deux rebords périphériques adjacents et assurant, par sa feuille métallique, la continuité de l'étanchéité.

La qualité de l'étanchéité de la barrière d'étanchéité secondaire dépend de plusieurs facteurs, notamment de la qualité de la nappe étanche utilisée pour la fabrication des panneaux et pour réaliser la jonction entre deux panneaux et de l'étanchéité des collages.

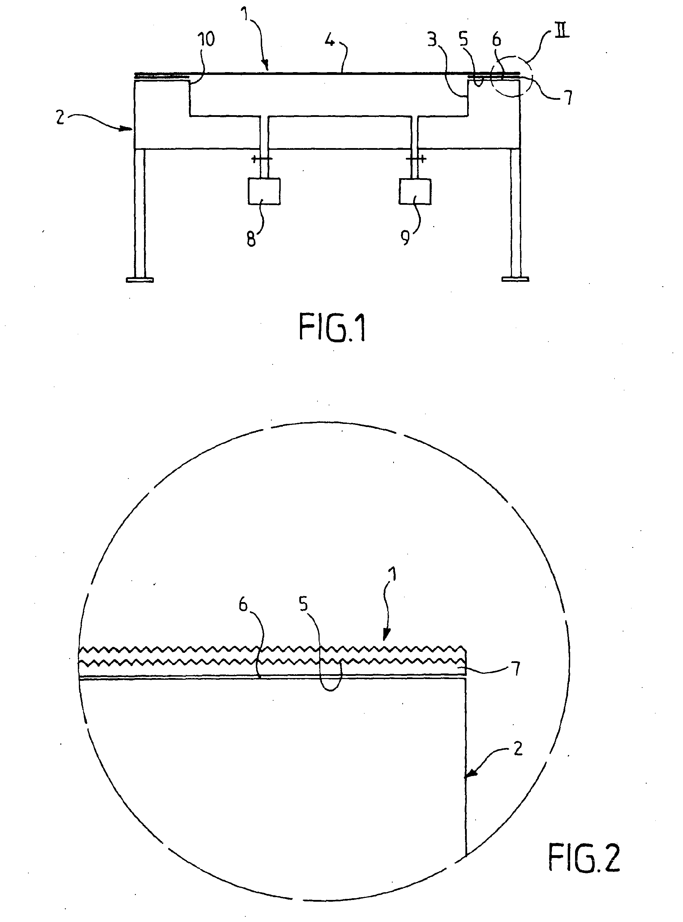

Pour garantir une étanchéité suffisante, il est connu de procéder à un test d'étanchéité sur une éprouvette de nappe étanche. Les figures 1 et 2 illustrent un banc de test 2 et une éprouvette 1 pour la mise en oeuvre d'un procédé de test d'étanchéité selon l'art antérieur.

L'éprouvette 1 comprend une feuille d'étanchéité, par exemple une fine feuille d'aluminium, agencée entre deux couches de renfort, par exemple des tissus de fibres de verre. Dans la suite de cette description, l'ensemble constitué par la feuille d'étanchéité et les couches de renfort est appelé la nappe. La nappe de l'éprouvette 1 présente une surface de liaison 5 qui entoure une zone à tester 4. Le procédé de test vise à tester l'étanchéité de l'éprouvette 1 à l'aide d'un banc de test 2.

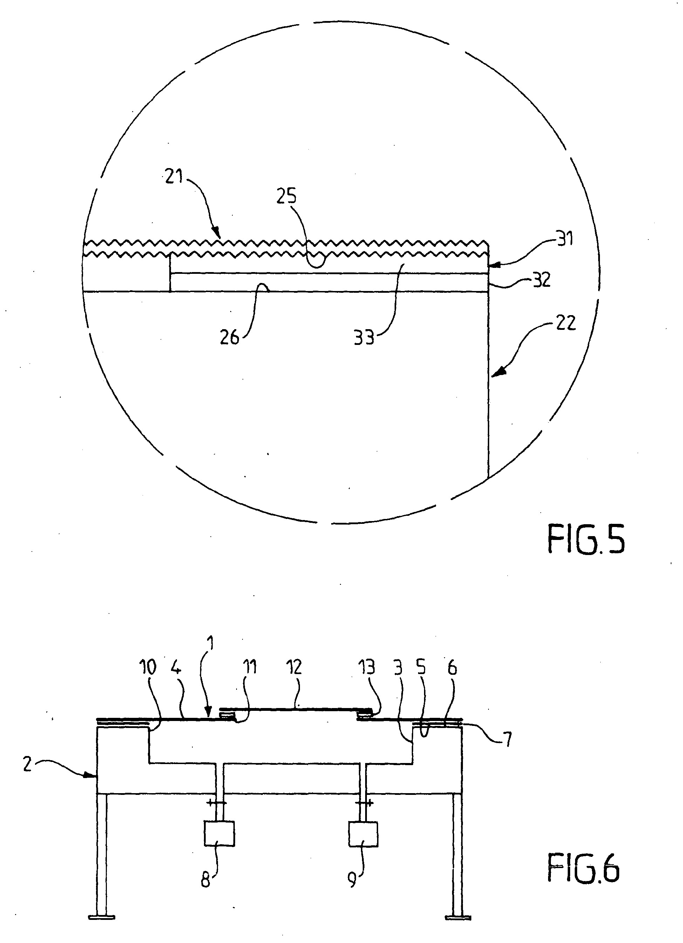

Dans une variante représentée sur la figure 6, la nappe de l'éprouvette 1 présente une ouverture 11 au niveau de la zone à tester 4. L'ouverture 11 est recouverte par une membrane 12 de constitution en trois couches similaires à celles de la nappe. La membrane est collée à la nappe tout autour de l'ouverture 11. Cela permet de tester la qualité de l'étanchéité du collage 13 entre la membrane 12 et la nappe.

Le banc de test 2 comprend une chambre de dépression 3 qui présente une ouverture 10. Une pompe à vide 8 et un capteur de pression 9 sont reliés à la chambre de dépression 3. Le banc de test 2 présente une surface de liaison 6 qui entoure l'ouverture 10 de la chambre de dépression 3.

Le procédé de test connu comprend le fait de fixer l'éprouvette 1 au banc de test 2 avec un joint de colle 7 qui relie de manière sensiblement étanche la surface de liaison 5 de l'éprouvette 1 à la surface de liaison 6 du banc de test 2.

Ensuite, la pompe à vide 8 est actionnée pour générer une dépression dans la chambre de dépression 3 jusqu'à un niveau défini de pression. Puis, on interrompt l'actionnement de la pompe à vide 8 et on mesure à l'aide du capteur de pression 9 la courbe de remontée en pression dans la chambre de pression 3. Cela représente un premier test de comportement en pression.

Ensuite, on réalise un premier choc thermique sur l'éprouvette 1, qui consiste à abaisser brutalement et fortement la température de l'éprouvette 1 en versant un lit d'azote liquide dessus. La température du banc de test 2, qui est relié à l'éprouvette 1, est également abaissée. L'azote liquide s'évapore naturellement et on attend la remontée à température ambiante de l'éprouvette 1 et du banc de test 2.

On réalise alors un deuxième test de comportement en pression. En alternant par la suite des chocs thermiques et des tests de comportement en pression, on obtient une évaluation du niveau initial de l'étanchéité de l'éprouvette 1 ainsi que de l'évolution de ce niveau d'étanchéité sous l'effet de chocs thermiques.

Ce procédé connu présente plusieurs inconvénients. Tout d'abord, la précision de la mesure est limitée par l'influence de l'étanchéité imparfaite réalisée par le joint de colle 7, en particulier dans le cas d'une éprouvette 1 dont les couches de renfort sont en matériau fibreux qui présente une certaine porosité. La répétitivité des mesures est également limitée en raison du grand nombre d'opérations manuelles nécessaires, notamment pour fixer l'éprouvette 1 sur le banc de test 2. Ce grand nombre d'opérations allonge à la fois la durée du procédé, notamment parce qu'il est nécessaire d'attendre la polymérisation du joint de colle 7, et alourdit le coût du procédé. La durée du procédé est également influencée par la durée des chocs thermiques, relativement longs à réaliser. Comme le banc de test subit les chocs thermiques, il est susceptible de se détériorer progressivement. L'influence de cette détérioration sur la mesure est difficilement appréciable et non distinguable de celle de l'éprouvette elle-même. De plus, le démontage de l'éprouvette 1 en fin de procédé entraîne sa destruction, ce qui rend impossible de réaliser un contre-essai ultérieurement. En fin de procédé, il est nécessaire de nettoyer le banc de test pour enlever les restes du joint de colle, avant de procéder au test d'une autre éprouvette.

Les documents US 4 979 390, BE 653 074, US 4 409 818, FR 2 172 321, GB 895 063, US 2 108 176, et US 4 246 775 décrivent différents dispositifs et procédés de test d'étanchéité. Généralement, une garniture d'étanchéité est prévue sur le dispositif de test, de manière à former une liaison sensiblement étanche par contact entre la garniture d'étanchéité du dispositif de test et l'élément à tester.

Toutefois aucun de ces documents ne permet de tester l'étanchéité d'une éprouvette comprenant une couche de renfort fibreuse. En effet, lorsqu'on met simplement en contact une garniture d'étanchéité avec la couche de renfort fibreuse d'une éprouvette, il peut se produire des fuites entre la garniture d'étanchéité et la couche fibreuse, et au sein la couche fibreuse, le long des fibres. Il est difficile de déterminer dans quelle mesure le niveau d'étanchéité mesuré est influencé par ces fuites.

Le document WO 00/09914 décrit un système de contrôle de fuite pour le traitement de toiles en mouvement.

L'invention a pour but de fournir un procédé sans au moins certains des inconvénients précités de l'art antérieur.

Pour cela, l'invention fournit un procédé de test d'étanchéité d'une éprouvette comprenant une feuille d'étanchéité et au moins une couche de renfort fibreuse adjacente à ladite feuille d'étanchéité, ledit procédé comprenant les étapes consistant à :
- fixer ladite éprouvette sur un banc de test comprenant une chambre de dépression de manière qu'une zone à tester de ladite éprouvette recouvre une ouverture de ladite chambre de dépression, une surface de liaison de ladite éprouvette qui entoure ladite zone à tester étant reliée par des moyens d'étanchéité à une surface de liaison dudit banc de test qui entoure ladite ouverture,
- effectuer un premier test de comportement en pression comprenant le fait de générer une dépression dans ladite chambre de dépression, et le fait de mesurer la pression dans ladite chambre de dépression,
- soumettre ladite éprouvette à au moins un premier choc thermique,
- effectuer au moins un deuxième test de comportement en pression,
caractérisé par le fait que lesdits moyens d'étanchéité sont aptes à autoriser une séparation non destructrice dudit banc de test et de ladite éprouvette, ledit procédé comprend au moins les étapes consistant à :
- après ledit premier test de comportement en pression, retirer ladite éprouvette dudit banc de test et soumettre ladite éprouvette audit premier choc thermique à distance dudit banc de test,
- fixer à nouveau ladite éprouvette audit banc de test pour effectuer ledit deuxième test de comportement en pression.

Grâce à ces caractéristiques, le banc de test n'est soumis à aucun choc thermique. Aucune détérioration du banc de test ne peut perturber les mesures. De plus, ces mesures peuvent se succéder rapidement car l'inertie thermique du banc de test n'entre pas en ligne de compte. En fin de procédé, l'éprouvette peut être conservée, ce qui permet de réaliser ultérieurement un contre-essai et donc de conserver une référence.

Les moyens d'étanchéité comprennent une première garniture d'étanchéité solidaire de ladite éprouvette, et une deuxième garniture d'étanchéité solidaire dudit banc de test, lesdites première et deuxième garnitures d'étanchéité étant aptes à former une liaison sensiblement étanche par contact.

Ainsi, la fiabilité, la précision et la répétitivité des mesures sont améliorées car l'influence de l'étanchéité des moyens d'étanchéité peut être quantifiée. De plus, les opérations en début et en fin de procédé sont très simples et rapides. En particulier, il n'est pas nécessaire d'attendre la polymérisation d'une colle en début de procédé, et aucune opération de nettoyage n'est nécessaire en fin de procédé.

Avantageusement, quand ladite éprouvette est retirée dudit banc de test pour être soumise à un choc thermique, ledit procédé comprend le fait de fixer une deuxième éprouvette audit banc de test et effectuer un test de comportement en pression avec ladite deuxième éprouvette.

Le taux d'utilisation du banc de test est amélioré. Cela permet de réduire le nombre nécessaire de bancs de test à volume de production donné.

L'invention fournit également une éprouvette comprenant une feuille d'étanchéité et au moins une couche de renfort fibreuse adjacente à ladite feuille d'étanchéité, ladite éprouvette présentant une zone à tester, caractérisée par le fait qu'elle comprend une garniture d'étanchéité qui entoure ladite zone à tester, ladite garniture d'étanchéité étant apte à former une liaison sensiblement étanche par contact avec une garniture d'étanchéité d'un banc de test.

Prévoir une éprouvette qui comprend elle-même une garniture d'étanchéité permet de réaliser une étanchéité contrôlée au niveau de cette garniture. On peut par exemple réaliser une étanchéité de haut niveau par une garniture qui imprègne les fibres de la couche de renfort fibreuse, par exemple avec de la colle polyuréthane. Ainsi, lorsque cette éprouvette est posée sur un banc de test, l'influence des éventuelles fuites au niveau de la garniture d'étanchéité est quantifiable.

De préférence, ladite garniture d'étanchéité est adjacente à au moins un bord de ladite éprouvette.

Dans un mode de réalisation, l'éprouvette comprend deux couches de renfort fibreuses de part et d'autre de la feuille d'étanchéité.

Selon un mode de réalisation particulier, ladite garniture d'étanchéité recouvre une portion de la surface d'une desdites couches de renfort, l'épaisseur de ladite éprouvette au niveau de sa périphérie n'étant pas recouverte par la garniture d'étanchéité. Alternativement, ladite garniture d'étanchéité recouvre une portion de la surface d'une desdites couches de renfort et l'épaisseur de ladite éprouvette au niveau de sa périphérie.

Dans le premier cas, cela permet de mesurer le niveau d'étanchéité de l'éprouvette aussi bien en ce qui concerne l'étanchéité transversale, c'est-à-dire perpendiculairement à la surface de l'éprouvette, que l'étanchéité tangentielle, c'est-à-dire parallèlement à la surface de l'éprouvette, qui est due, dans le cas de couches de renfort en matériau fibreux, à la porosité introduite par les fibres. Dans le deuxième cas, seul le niveau d'étanchéité transversale est considéré.

De préférence, ladite garniture d'étanchéité recouvre une portion de la surface de l'autre desdites couches de renfort.

Avantageusement, l'éprouvette présente une forme sensiblement circulaire, ladite garniture d'étanchéité présentant une forme sensiblement annulaire.

Ces caractéristiques facilitent la réalisation de la garniture d'étanchéité, améliorent la qualité de la liaison sensiblement étanche par contact avec la garniture d'étanchéité d'un banc de test, et améliorent la résistance de l'éprouvette aux chocs thermiques.

Selon un mode de réalisation particulier, ladite garniture d'étanchéité est surmoulée ou collée à l'ensemble formé par ladite feuille d'étanchéité et lesdites couches de renfort.

Avantageusement, ladite garniture d'étanchéité est réalisée en un matériau qui présente un coefficient de dilatation et un taux de déformation admissible à froid compatibles avec ceux de l'ensemble formé par ladite feuille d'étanchéité et lesdites couches de renfort. Par exemple elle est réalisée en colle polyuréthane ou en caoutchouc.

L'invention fournit également un banc de test d'étanchéité pour éprouvette comprenant une feuille d'étanchéité et deux couches de renfort de part et d'autre de ladite feuille d'étanchéité, ledit banc de test comprenant une chambre de dépression qui présente une ouverture destinée à être recouverte par une zone à tester de ladite éprouvette, caractérisé par le fait qu'il comprend une garniture d'étanchéité qui entoure ladite ouverture, ladite garniture d'étanchéité étant apte à former une liaison sensiblement étanche par contact avec une garniture d'étanchéité de ladite éprouvette.

De préférence, le banc de test comprend des moyens de fixation aptes à appuyer sur ladite éprouvette de manière à presser la garniture d'étanchéité de l'éprouvette contre la garniture d'étanchéité du banc de test.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue schématique d'un banc de test et d'une éprouvette selon un mode de réalisation de l'art antérieur,
- la figure 2 représente un détail de la figure 1,
- la figure 3 est une vue schématique d'un banc de test et d'une éprouvette selon un mode de réalisation de l'invention,
- la figure 4 représente un détail de la figure 3,
- la figure 5 est une vue similaire à la figure 4, selon une variante de réalisation,
- la figure 6 représente le banc de test de la figure 1 sur lequel est fixée une éprouvette de l'art antérieur selon une variante.

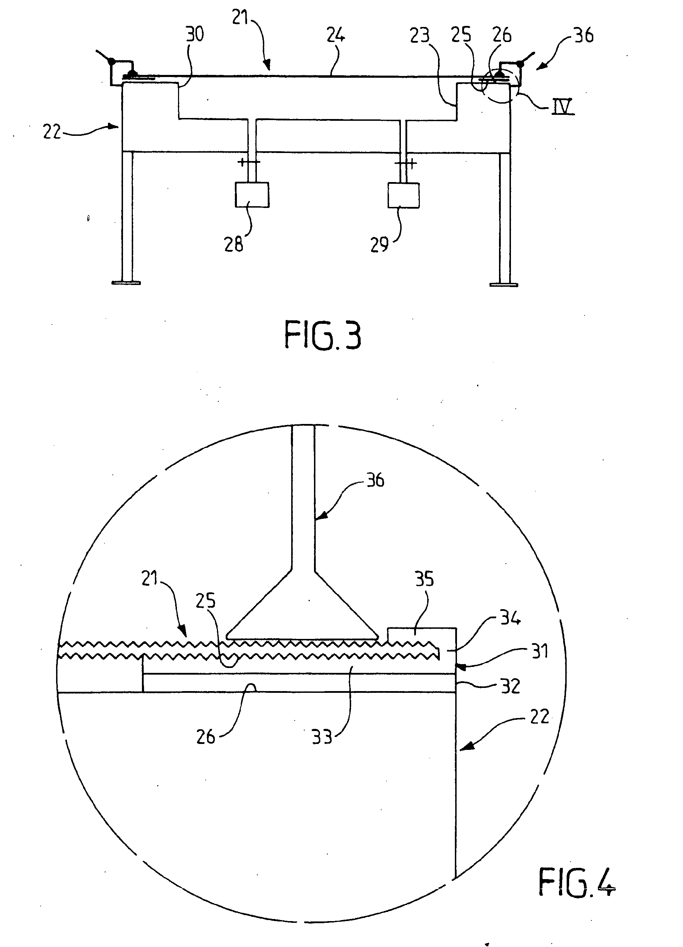

Les figures 3 à 5 illustrent un banc de test et une éprouvette pour la mise en oeuvre d'un procédé de test d'étanchéité selon un mode de réalisation de l'invention. Les éléments identiques ou similaires à des éléments du mode de réalisation des figures 1 et 2 sont désignés par les mêmes numéros de références, augmentés de 20, et ne sont plus décrits en détail.

L'éprouvette 21 comprend une feuille d'étanchéité et deux couches de renfort de part et d'autre de ladite feuille d'étanchéité. La feuille d'étanchéité peut être métallique, par exemple en aluminium, ou être réalisée en un autre matériau étanche. Les couches de renfort sont fibreuses, par exemple il s'agit de tissus de fibre de verre. Dans la suite de cette description, l'ensemble constitué par la feuille d'étanchéité et les couches de renfort est appelé la nappe. La nappe est de préférence de forme circulaire et présente une zone à tester 24 centrale. L'éprouvette 21 comprend également une garniture d'étanchéité 31 annulaire qui entoure ladite zone à tester 24. Alternativement, la nappe pourrait présenter une autre forme, par exemple être carrée. Dans ce cas la garniture d'étanchéité est également de forme carrée et est adjacente à chaque bord de la nappe.

Sur la figure 4, on voit que la garniture d'étanchéité 31 comprend trois portions : une portion de contact 33 recouvre une surface de liaison 25 de la nappe qui entoure la zone à tester 24, une portion d'épaisseur 34 s'étend parallèlement à l'épaisseur de la nappe et entoure sa périphérie, et une portion de recouvrement 35 du côté de la nappe opposé à la portion de contact 33. Dans une variante représentée sur la figure 5, seule la portion de contact 33 est prévue.

La garniture d'étanchéité 31 est par exemple surmoulée, c'est-à-dire moulée autour de la nappe, ou collée à la nappe. Elle est réalisée en un matériau qui résiste à des températures cryogéniques, c'est-à-dire qui ne subit pas d'endommagement du type faïençage ou fragilité lors des chocs thermiques, et qui présente un coefficient de déformation et un taux de déformation admissible à froid compatibles avec ceux de la nappe, c'est-à-dire du même ordre de grandeur pour éviter que le choc thermique endommage l'éprouvette 21. Par exemple, la garniture d'étanchéité 31 est réalisée en colle polyuréthane polymérisée ou en caoutchouc. Dans un mode de réalisation, la garniture d'étanchéité 31 imprègne les fibres des couches de renfort.

Selon une variante non représentée, de manière similaire à ce qui est décrit en référence à la figure 6, la nappe de l'éprouvette 21 présente une ouverture au niveau de la zone à tester 24. L'ouverture est recouverte par une membrane de constitution en trois couches similaires à celles de la nappe. La membrane est collée à la nappe tout autour de l'ouverture. Cela permet de tester la qualité de l'étanchéité du collage entre la membrane et la nappe.

Le banc de test 22 comprend lui aussi une garniture d'étanchéité 32, fixée par exemple par collage sur une surface de liaison 26 qui entoure l'ouverture 30 de la chambre de dépression 23. Comme expliqué ci-dessous, la garniture d'étanchéité 32 ne subit pas de chocs thermiques. Elle peut par exemple être réalisée en caoutchouc, en mousse à cellules fermées ou en mastic à vide. Dans le mode de réalisation représenté, le banc de test 22 comprend également une presse 36. Dans un autre mode de réalisation, la presse 36 est omise.

Le procédé de test selon un mode de réalisation de l'invention comprend le fait de fixer l'éprouvette 21 au banc de test 22 en agençant la portion de contact 33 de la garniture d'étanchéité 31 en contact avec la garniture d'étanchéité 32, la zone à tester 24 recouvrant l'ouverture 30. La presse 36 est actionnée de manière à appuyer la garniture d'étanchéité 31 contre la garniture d'étanchéité 32 de manière à réaliser une liaison sensiblement étanche par contact. Dans la variante où la presse 36 est omise, le contact entre la garniture d'étanchéité 31 et la garniture d'étanchéité 32 ainsi que le vide créé dans la chambre de dépression 23 suffisent à relier l'éprouvette 21 au banc de test 22.

Ensuite, on réalise un premier test de comportement en pression, de manière similaire à ce qui est décrit ci-dessus en rapport au procédé de l'art antérieur, sans que cette manière soit essentielle à la réalisation de l'invention.

Ensuite, on sépare l'éprouvette 21 du banc de test 22. Cette séparation se fait sans destruction de l'éprouvette 21 ou du banc de test 22 : la garniture d'étanchéité 31 reste solidaire de la nappe et se sépare de la garniture d'étanchéité 32 qui reste solidaire du reste du banc de test 22.

On réalise alors un premier choc thermique sur l'éprouvette 21, à distance du banc de test qui ne subit donc pas de choc thermique. Pendant ce temps, le banc de test 22 peut être utilisé pour réaliser un test de comportement en pression avec une autre éprouvette. Le choc thermique peut être réalisé en versant de l'azote liquide sur l'éprouvette 21, ou de toute autre manière appropriée.

Ensuite on fixe à nouveau l'éprouvette 21 au banc de test 22 et on réalise un deuxième test de comportement en pression. En alternant par la suite des chocs thermiques et des tests de comportement en pression, on obtient une évaluation du niveau initial de l'étanchéité de l'éprouvette 21 ainsi que de l'évolution de ce niveau d'étanchéité sous l'effet d'un cycle de chocs thermiques.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de test d'étanchéité d'une éprouvette (21) comprenant une feuille d'étanchéité et au moins une couche de renfort fibreuse adjacente à ladite feuille d'étanchéité, ledit procédé comprenant les étapes consistant à :
- fixer ladite éprouvette sur un banc de test (22) comprenant une chambre de dépression (23) de manière qu'une zone à tester (24) de ladite éprouvette recouvre une ouverture (30) de ladite chambre de dépression, une surface de liaison (25) de ladite éprouvette qui entoure ladite zone à tester étant reliée par des moyens d'étanchéité (31, 32) à une surface de liaison (26) dudit banc de test qui entoure ladite ouverture,
- effectuer un premier test de comportement en pression comprenant le fait de générer une dépression dans ladite chambre de dépression, et le fait de mesurer la pression dans ladite chambre de dépression,
- soumettre ladite éprouvette à au moins un premier choc thermique,
- effectuer au moins un deuxième test de comportement en pression, **caractérisé par le fait que** lesdits moyens d'étanchéité comprennent une première garniture d'étanchéité (31) solidaire de ladite éprouvette, et une deuxième garniture d'étanchéité (32) solidaire dudit banc de test, lesdites première et deuxième garniture d'étancheité étant aptes à former une liaison sensiblement étanche par contact, de manière à autoriser une séparation non destructrice dudit banc de test et de ladite éprouvette, ledit procédé comprend au moins les étapes consistant à :
- après ledit premier test de comportement en pression, retirer ladite éprouvette dudit banc de test et soumettre ladite éprouvette audit premier choc thermique à distance dudit banc de test,
- fixer à nouveau ladite éprouvette audit banc de test pour effectuer ledit deuxième test de comportement en pression.

2. Procédé de test d'étanchéité selon la revendication 1, **caractérisé par le fait que**, quand ladite éprouvette est retirée dudit banc de test pour être soumise à un choc thermique, ledit procédé comprend le fait de fixer une deuxième éprouvette audit banc de test et effectuer un test de comportement en pression avec ladite deuxième éprouvette.

3. Eprouvette (21) comprenant une feuille d'étanchéité et au moins une couche de renfort fibreuse adjacente à ladite feuille d'étanchéité, ladite éprouvette présentant une zone à tester (24),
**caractérisée par le fait qu'**elle comprend une garniture d'étanchéité (31) qui entoure ladite zone à tester.

4. Eprouvette selon la revendication 3, **caractérisée par le fait que** ladite garniture d'étanchéité est adjacente à au moins un bord de ladite éprouvette.

5. Eprouvette selon l'une des revendications 3 à 4, **caractérisée par le fait que** ladite garniture d'étanchéité recouvre une portion de la surface de ladite couche de renfort, l'épaisseur de ladite éprouvette au niveau de sa périphérie n'étant pas recouverte par la garniture d'étanchéité.

6. Eprouvette selon l'une des revendications 3 à 4, **caractérisée par le fait que** ladite garniture d'étanchéité recouvre une portion de la surface de ladite couche de renfort et l'épaisseur de ladite éprouvette au niveau de sa périphérie.

7. Eprouvette selon la revendication 6, **caractérisée par le fait qu'**elle comprend deux couches de renfort fibreuses de part et d'autre de ladite feuille d'étanchéité, ladite garniture d'étanchéité recouvrant une portion de la surface de l'autre desdites couches de renfort.

8. Eprouvette selon l'une des revendications 3 à 7, **caractérisée par le fait qu'**elle présente une forme sensiblement circulaire, ladite garniture d'étanchéité présentant une forme sensiblement annulaire.

9. Eprouvette selon l'une des revendications 3 à 8, **caractérisée par le fait que** ladite garniture d'étanchéité est surmoulée ou collée à l'ensemble formé par ladite feuille d'étanchéité et ladite couche de renfort.

10. Eprouvette selon l'une des revendications 3 à 9, **caractérisée par le fait que** ladite garniture d'étanchéité est réalisée en un matériau qui présente un coefficient de dilatation et un taux de déformation admissible à froid compatibles avec ceux de l'ensemble formé par ladite feuille d'étanchéité et ladite couche de renfort.

11. Eprouvette selon la revendication 10, **caractérisé par le fait que** ladite garniture d'étanchéité est réalisée en colle polyuréthane ou en caoutchouc.

12. Eprouvette selon l'une des revendications 3 à 11, dans laquelle ladite garniture d'étanchéité imprègne les fibres de ladite au moins une couche de renfort.

## Claims

1. Method for testing the tightness of a specimen (21), comprising a tightness sheet and at least one fibrous reinforcement layer adjacent to the said tightness sheet, the said method comprising the steps consisting of:
- securing the said specimen on a test bench (22) comprising a low-pressure chamber (23), such that an area to be tested (24) of the said specimen covers an opening (30) in the said low-pressure chamber, a bonding surface (25) of the said specimen which surrounds the said area to be tested being bonded by tightness means (31, 32) to a bonding surface (26) of the said test bench which surrounds the said opening;
- carrying out a first pressure performance test, comprising the fact of generating low pressure in the said low-pressure chamber, and the fact of measuring the pressure in the said low-pressure chamber;
- subjecting the said specimen to at least a first thermal shock;
- carrying out at least a second pressure performance test,
**characterised in that** the said tightness means comprise a first tightness seal (31) which is integral with the said specimen, and a second tightness seal (32) which is integral with the said test bench, the said first and second tightness seals being able to form a bond which is substantially sealed by contact, such as to permit non-destructive separation of the said test bench and the said specimen, the said method comprising at least the steps consisting of:
- after the said first pressure performance test, removing the said specimen from the said test bench, and subjecting the said specimen to the first thermal shock at a distance from the said test bench; and
- securing the said specimen once more on the said test bench in order to carry out the said second pressure performance test.

2. Tightness test method according to claim 1,
**characterised in that**, when the said specimen is removed from the said test bench in order to be subjected to a thermal shock, the said method comprises the fact of securing a second specimen on the said test bench and carrying out a pressure performance test with the said second specimen.

3. Specimen (21) comprising a tightness sheet and at least one fibrous reinforcement layer adjacent to the said tightness sheet, the said specimen having an area to be tested (24), **characterised in that** it comprises a tightness seal (31) which surrounds the said area to be tested.

4. Specimen according to claim 3, **characterised in that** the said tightness seal is adjacent to at least one edge of the said specimen.

5. Specimen according to one of claims 3 or 4,
**characterised in that** the said tightness seal covers a portion of the surface of the said reinforcement layer, the thickness of the said specimen in the region of its periphery not being covered by the tightness seal.

6. Specimen according to one of claims 3 or 4,
**characterised in that** the said tightness seal covers a portion of the surface of the said reinforcement layer and the thickness of the said specimen in the region of its periphery.

7. Specimen according to claim 6, **characterised in that** it comprises two fibrous reinforcement layers on both sides of the said tightness sheet, the said tightness seal covering a portion of the surface of the other one of the said reinforcement layers.

8. Specimen according to one of claims 3 to 7,
**characterised in that** it has a substantially circular form, the said tightness seal having a substantially annular form.

9. Specimen according to one of claims 3 to 8,
**characterised in that** the said tightness seal is over-moulded on, or glued onto the assembly formed by the said tightness sheet and the said reinforcement layer.

10. Specimen according to one of claims 3 to 9,
**characterised in that** the said tightness seal is made of a material which has a coefficient of expansion and a rate of deformation admissible in cold conditions which are compatible with those of the assembly formed by the said tightness sheet and the said reinforcement layer.

11. Specimen according to claim 10, **characterised in that** the said tightness seal is made of polyurethane glue or rubber.

12. Specimen according to one of claims 3 to 11, wherein the said tightness seal impregnates the fibres of the said at least one reinforcement layer.

## Patentansprüche

1. Verfahren zur Dichtigkeitsprüfung einer Probe (21), die eine Dichtfolie und wenigstens eine Faser-Verstärkungsschicht benachbart der Dichtfolie umfaßt, wobei das Verfahren die Schritte aufweist, die in folgendem bestehen:
- Befestigen der Probe auf einem Prüfstand (22) mit einer Unterdruckkammer (23) derart, daß eine Prüfzone (24) der Probe eine Öffnung (30) der Unterdruckkammer bedeckt, wobei eine Verbindungsfläche (25) der Probe, welche die Prüfzone umschließt, durch Dichtmittel (31, 32) mit einer Verbindungsfläche (26) des Prüfstandes verbunden wird, welche die Öffnung umschließt,
- Ausführen eines ersten Versuchs zum Druckverhalten, der den Vorgang enthält, einen Unterdruck in der Unterdruckkammer zu generieren, und den Vorgang, den Druck in dieser Unterdruckkammer zu messen,
- die Probe mindestens einem ersten thermischen Schock zu unterziehen,
- Durchführen wenigstens eines zweiten Versuchs zum Druckverhalten,
**dadurch gekennzeichnet,**
**daß** die Dichtmittel eine erste Dichtung (31) umfassen, die einstückig mit der Probe ausgebildet ist, und eine zweite Dichtung (32), die einstückig mit dem Prüfstand ausgebildet ist, wobei die erste und die zweite Dichtung dazu geeignet sind, eine im wesentlichen dichte Verbindung durch Kontakt zu bilden, derart, daß eine zerstörungsfreie Trennung des Prüfstandes und der Probe erfolgen kann, wobei das Verfahren wenigstens die Schritte aufweist, die darin bestehen, daß
- nach dem ersten Versuch zum Druckverhalten die Probe von dem Prüfstand abgezogen und dem ersten thermischen Schock vom Prüfstand entfernt unterzogen wird,
- die Probe erneut auf dem Prüfstand befestigt wird, um den zweiten Versuch zum Druckverhalten durchzuführen.

2. Verfahren zur Dichtigkeitsprüfung nach Anspruch 1, **dadurch gekennzeichnet, daß**, wenn die Probe vom Prüfstand abgezogen wird, um sie dem ersten thermischen Schock zu unterziehen, das Verfahren den Vorgang umfaßt, eine zweite Probe am Prüfstand zu befestigen und mit dieser zweiten Probe einen Versuch zum Druckverhalten auszuführen.

3. Probe (21) mit einer Dichtfolie und wenigstens einer Faser-Verstärkungsschicht benachbart der Dichtfolie, wobei die Probe eine Prüfzone (24) aufweist, **dadurch gekennzeichnet, daß** sie eine die Prüfzone umgebende Dichtung (31) umfaßt.

4. Probe nach Anspruch 3, **dadurch gekennzeichnet, daß** diese Dichtung mindestens einem Rand benachbart ist.

5. Probe nach einem der Ansprüche 3 bis 4, **dadurch gekennzeichnet, daß** diese Dichtung einen Bereich der Oberfläche der Verstärkungsschicht bedeckt, wobei die Dicke der Probe an ihrem Umfang nicht von der Dichtung bedeckt ist.

6. Probe nach einem der Ansprüche 3 bis 4, **dadurch gekennzeichnet, daß** die Dichtung einen Bereich der Oberfläche der Verstärkungsschicht und die Dicke der Probe an deren Umfang bedeckt.

7. Probe nach Anspruch 6, **dadurch gekennzeichnet, daß** sie zwei Faser-Verstärkungsschichten beidseits der Dichtfolie umfaßt, wobei die Dichtung einen Bereich der Oberfläche der anderen dieser Verstärkungsschichten überdeckt.

8. Probe nach einem der Ansprüche 3 bis 7, **dadurch gekennzeichnet, daß** sie eine im wesentlichen kreisförmige Form aufweist, wobei die Dichtung eine im wesentlichen ringförmige Form hat.

9. Probe nach einem der Ansprüche 3 bis 8, **dadurch gekennzeichnet, daß** die Dichtung an die von der Dichtfolie und der Verstärkungsschicht gebildete Gesamtheit angeklebt oder angegossen ist.

10. Probe nach einem der Ansprüche 3 bis 9, **dadurch gekennzeichnet, daß** die Dichtung aus einem Material besteht, das einen zulässigen Wärmeausdehnungskoeffizienten und ein zulässiges Umformungsverhältnis im Kalten hat, die kompatibel mit denen der von der Dichtfolie und der Verstärkungsschicht gebildeten Gesamtheit sind.

11. Probe nach Anspruch 10, **dadurch gekennzeichnet, daß** die Dichtung aus Polyuhrethan-Kitt oder aus Kautschuk gefertigt ist.

12. Probe nach einem der Ansprüche 3 bis 11, **dadurch gekennzeichnet, daß** die Dichtung die Fasern der wenigstens einen Verstärkungsschicht durchsetzt.
